# FASCICULE DE BREVET EUROPEEN

(11) **EP 1 435 800 B1**
(45) Date de publication et mention de la délivrance du brevet: **10.01.2007**
(21) Numéro de dépôt: 02790521.5
(22) Date de dépôt: 16.10.2002
(51) Int. Cl.: A23L 3/32

(54) **DISPOSITIF ET PROCEDE DE TRAITEMENT PAR CHAMP ELECTRIQUE PULSE D'UNE SUBSTANCE CONTENANTDES ORGANISMES INDESIRABLES**
GERÄT UND VERFAHREN ZUR BEHANDLUNG EINER SUBSTANZ, DIE UNERWÜNSCHTE MIKROORGANISMEN ENTHÄLT, MIT EINEM GEPULSTEN ELEKTRISCHEN FELD
DEVICE AND METHOD FOR TREATING A SUBSTANCE CONTAINING UNDESIRABLE ORGANISMS USING A PULSED ELECTRICAL FIELD

(30) Priorité: 18.10.2001 FR 0113431
(43) Date de publication de la demande: 14.07.2004
(73) Titulaire: COMMISSARIAT A L'ENERGIE ATOMIQUE, 75015 Paris (FR)
(72) Inventeur: CHATROUX, Daniel, F-38470 Teche (FR); NOUVEL, Philippe, F-26740 Sauzet (FR); SCORDIA, Julien, F-55300 Varneville (FR)
(74) Mandataire: Poulin, Gérard
(86) Numéro de dépôt international: PCT/FR2002/003537
(87) Numéro de publication internationale: WO 2003/039271

(56) Documents cités:
- EP-A- 1 123 662
- WO-A-93/25097
- CH-A- 319 956
- DE-A- 2 336 085
- FR-A- 2 792 207
- US-A- 4 695 472
- US-A- 5 690 978
- US-A- 6 027 754
- US-A- 6 077 479
- US-B1- 6 231 908
- DATABASE WPI Section Ch, Week 199411 Derwent Publications Ltd., London, GB; Class D13, AN 1994-083959 XP002204523 & CN 1 072 328 A (WUHAN HIGH VOLTAGE INST) , 26 mai 1993 (1993-05-26)

## Description

### DOMAINE TECHNIQUE

L'invention se rapporte au domaine du traitement de substances colonisées par des organismes indésirables.

Plus particulièrement, l'invention concerne le traitement de substances du type aliment semi-solide ou aliment liquide, comme le lait, le jus d'orange ou le blanc d'oeuf. Dans ce cas, les organismes à détruire lors du traitement sont les bactéries, les spores ou tout autre micro-organisme indésirable ayant colonisé l'aliment à traiter.

L'invention peut également concerner le domaine du traitement des eaux, par exemple pour les rendre potables, en détruisant les bactéries ainsi que tout autre organisme indésirable comme les coquillages ou les moules.

Enfin, plus spécifiquement, la présente invention concerne les dispositifs et les procédés de traitement par champ électrique pulsé d'une substance en écoulement colonisée par des organismes indésirables.

### ETAT DE LA TECHNIQUE ANTERIEURE

En dehors des méthodes de traitement chimique éloignées du domaine spécifique de l'invention, on dénombre trois différents types de méthode de traitement de substance en écoulement colonisée par au moins un organisme indésirable.

Parmi ces différentes méthodes, on connaît tout d'abord les procédés se basant sur une onde de pression se propageant dans un milieu à traiter. Cette onde est engendrée par un arc électrique provoqué dans le milieu lui-même ou dans une chambre adjacente, cette chambre comprenant une membrane souple capable de transférer ces ondes jusque dans le milieu à traiter.

Le principal inconvénient de cette méthode réside dans la perte ou dans la dégradation des qualités gustatives et nutritives des aliments traités.

Comme second type de méthode, on connaît les procédés se basant sur l'application d'un courant électrique continu dans le milieu à traiter. Une telle méthode entraîne des effets mortels pour les organismes indésirables, en raison d'une part de la formation de produits d'électrolyse sur les électrodes, et en raison d'autre part de l'augmentation de la température dans le milieu à traiter.

Dans ce procédé, l'alimentation électrique reste simple et peu coûteuse, mais doit néanmoins être couplée à un dispositif de refroidissement du milieu, ce qui entraîne une diminution considérable de la rentabilité du système. De plus, on assiste également à une perte ou à une dégradation des qualités gustatives et nutritives des aliments traités.

Le dernier type de méthode connu, celui concernant spécifiquement l'invention, consiste en une application d'un champ électrique pulsé au sein du milieu à traiter.

Ce type de méthode est particulièrement intéressant en raison de l'absence d'effets secondaires sur la substance traitée, notamment en ce qui concerne ses qualités gustatives et nutritives. En effet, on procède à une application de plusieurs brèves impulsions de tension, de l'ordre d'une centaine de nanosecondes à quelques microsecondes, ce qui n'est en aucun cas suffisant pour entraîner un réchauffement significatif de la substance à traiter. Ainsi, aucun moyen supplémentaire de refroidissement n'est indispensable pour mettre en oeuvre ce type de procédé.

Dans les dispositifs capables de traiter des substances selon un procédé appliquant un champ électrique pulsé, on note deux principales catégories.

La première catégorie comprend les dispositifs dits transversaux, c'est-à-dire des dispositifs dans lesquels le champ électrique pulsé appliqué est sensiblement perpendiculaire à une direction principale d'écoulement de la substance.

La seconde catégorie comprend les dispositifs dits longitudinaux, c'est-à-dire des dispositifs dans lesquels le champ électrique pulsé appliqué est sensiblement parallèle à une direction principale d'écoulement de la substance.

Selon l'art antérieur, lorsqu'ils fonctionnent à puissance égale, les dispositifs longitudinaux présentent une meilleure efficacité de traitement que les dispositifs transversaux. Néanmoins, bien qu'ils soient très efficaces dans le traitement de la substance, ces dispositifs comprennent des plaques ou des grilles à travers lesquelles passe la substance à traiter pour uniformiser le champ électrique pulsé, ce qui entraîne des pertes de charge considérables. Pour traiter des volumes importants de substance, il est donc impératif de mettre en oeuvre une pompe dont la puissance consommée est totalement incompatible avec une production industrielle rentable, ceci en raison notamment de la petite surface des ouvertures pratiquées dans les grilles ou dans les plaques.

Les deux catégories de dispositifs sont décrites dans les documents FR 2 792 207 et WO 99 63843. Un inconvénient supplémentaire afférent à ces dispositifs concerne la petite valeur de la fréquence des impulsions électriques, cette caractéristique interdisant le traitement de volumes importants de substance. En effet, l'efficacité du traitement dépend directement de l'amplitude des impulsions du champ électrique pulsé, mais n'est en aucun cas dépendante de la durée de ces impulsions.

Le document US 6 077 479 illustre un autre type de dispositif longitudinal. Un isolant est intercalé entre chaque couple d'électrodes, ce qui a pour effet d'augmenter localement, au niveau de cet isolant, la valeur du champ électrique. L'avantage réside dans une limitation des lignes de champ de fuite, et par voie de conséquence, une limitation des dissipations par effet joule dans la substance traitée.

Cependant, le champ électrique appliqué est non-uniforme, car il est maximum sur le bord de la conduite et minimum au centre de cette dernière. De ce fait, le traitement de la substance est irrégulier et non satisfaisant pour répondre aux besoins spécifiques d'une production industrielle.

Les dispositifs de traitement transversaux sont généralement réputés moins efficaces du point de vue de la qualité de traitement, mais présentent des pertes de charge moindres par rapport aux pertes rencontrées dans les dispositifs de traitement longitudinaux.

C'est ainsi que le même document US 6 077 479 résout partiellement le problème de la non-uniformité du champ électrique appliqué, en intercalant un éléments isolant percé de plusieurs passages d'axe perpendiculaire à la direction principale d'écoulement de la substance. Cet élément isolant permet de faire converger l'ensemble des lignes de champ dans les passages de la substance, afin d'augmenter localement la valeur du champ électrique à l'intérieur de ces passages. Néanmoins, ce type de dispositif engendre des pertes de charge considérables et ne permet pas de traiter des débits de substance importants.

L'art antérieur précise pour ce type de dispositif transversal, notamment dans le document WO 93 25097, qu'il est indispensable de recouvrir les électrodes avec des matériaux tels que l'or, le platine ou des oxydes métalliques, afin que ces électrodes ne participent pas à la réaction électrolytique lors du passage du courant. D'après ce document, il est impératif de se protéger contre la formation d'arcs électriques, ce qui provoque en outre l'adjonction de moyens coûteux de sécurité. De plus, dans un tel dispositif, la surface transversale de passage de la substance comprend des dimensions très faibles, ce qui induit un débit de traitement limité.

Dans le document WO 00 56179, il est proposé une solution dans laquelle les électrodes ne sont pas en contact avec la substance à traiter, afin de s'affranchir des problèmes de dépôts sur ces électrodes. Cependant, ce dispositif doit impérativement faire appel à des montages de compression magnétique, pour aboutir à des temps d'impulsions très courts de l'ordre de 0,07 ns à 7 ns. Cette fréquence transitoire très élevée pose de surcroît des problèmes concernant les permittivités relatives des parois. Les permittivités de ces parois doivent être au moins supérieures ou égales à la permittivité de la substance à traiter. En effet, en l'absence de telles caractéristiques techniques, le traitement s'avère inefficace puisque le champ électrique appliqué est uniquement présent dans les parois, et non dans la substance à traiter.

Pour répondre à ce problème, le document US 4 695 472 propose de remédier aux inconvénients précédents en utilisant une membrane apte à laisser passer les ions. Néanmoins, ce type de dispositif est sujet aux arcs électriques et ne permet pas de traiter des débits de substance importants.

De nombreux autres dispositifs transversaux sont connus de l'art antérieur. Ces dispositifs, aux même titre que ceux cités précédemment, utilisent habituellement un générateur d'impulsions du type tube électronique à gaz, ce dernier étant très onéreux mais répondant à une nécessité de fournir des courants forts à la substance à traiter.

De plus, outre le coût d'investissement important provenant de la nécessité de se munir d'un générateur du type tube électronique à gaz, le coût de fonctionnement des dispositifs transversaux est également relativement élevé, à cause de la durée de vie limitée de ces générateurs. Ces derniers subissent en effet un phénomène de vieillissement par usure du type érosion cathodique, ce qui nécessite de les remplacer relativement fréquemment. Notons que ce problème est également rencontré dans les dispositifs longitudinaux.

Enfin, les dispositifs de traitement transversaux comprennent quasiment tous le même inconvénient de devoir traiter un faible débit de substance pour pouvoir obtenir un traitement satisfaisant. Cet inconvénient majeur en terme de rentabilité du dispositif provient soit d'une surface transversale de passage trop étroite, soit d'une limitation du générateur dans sa capacité à fonctionner à une fréquence d'impulsion élevée. Dans ce dernier cas, certains dispositifs pratiquent une adjonction d'un compresseur magnétique pour augmenter la fréquence de ces impulsions, ce qui engendre inévitablement des surcoûts supplémentaires pour la mise en oeuvre du dispositif de traitement.

Les documents DE-A-2336085, US-A-6027754 et CN-A-1072328 divulguent des dispositifs pour le traitement de substances colonisées par des organismes indésirables.

### EXPOSÉ DE L'INVENTION

L'invention a donc pour but de remédier à tout ou partie des inconvénients précités que présentent les dispositifs de traitement de l'art antérieur.

En outre, le but de l'invention est de proposer un dispositif de traitement par champ électrique pulsé d'une substance en écoulement colonisée par au moins un organisme indésirable, ce dispositif étant capable de traiter des débits importants de substance à faibles coûts.

Enfin, le but de l'invention est également de présenter un procédé de traitement par champ électrique pulsé d'une substance en écoulement colonisée par au moins un organisme indésirable, ce procédé étant apte à être mis en oeuvre par un dispositif de traitement tel que celui répondant au but mentionné ci-dessus.

Pour ce faire, l'invention a pour objet un dispositif de traitement par champ électrique pulsé d'une substance en écoulement colonisée par au moins un organisme indésirable, le dispositif comprenant une zone d'écoulement de la substance dans laquelle se trouve au moins une zone de traitement se situant dans une zone de passage associée de la substance. Selon l'invention, chaque zone de traitement s'inscrit uniquement partiellement dans la zone de passage associée, le dispositif comprenant de plus des moyens de mise en mouvement pour déplacer chaque zone de traitement de la substance dans toute la zone de passage associée.

Avantageusement, le dispositif selon l'invention met en oeuvre une ou plusieurs zones de traitement, dont le volume de chacune d'entre elles, à un instant t donné du traitement de la substance, est strictement inférieur au volume de la zone de passage associée. Le fait que chacune de ces zones de traitement soit en mouvement dans toute la zone de passage associée, permet d'obtenir un débit important de substance traitée, tout en assurant un traitement efficace.

Par ailleurs, cet agencement particulier de moyens engendre une réduction des coûts d'investissement et de fonctionnement du dispositif. En effet, la quantité de substance à traiter à un instant t du traitement étant très faible, on peut utiliser des générateurs délivrant des courants moins importants que ceux requis dans les dispositifs de l'art antérieur. Le courant à fournir par le générateur d'impulsions électriques est donc plus faible, en raison de l'augmentation de la résistance équivalente de la substance, provoquée directement par la réduction de son volume. Les générateurs pouvant être utilisés dans le dispositif selon l'invention sont par voie de conséquence moins onéreux, et de surcroît plus fiables.

De préférence, chaque zone de traitement est formée par une association de deux électrodes situées en regard l'une de l'autre, les électrodes comprenant une électrode primaire positionnée sur un organe se situant à l'intérieur de la zone d'écoulement de la substance et une électrode secondaire située sur une paroi délimitant en partie la zone d'écoulement.

Avec un tel dispositif, un avantage réside dans la possibilité de mettre en rotation l'une quelconque des deux électrodes, voire les deux, pour former une zone de traitement en mouvement dans la zone de passage associée. Grâce à cet agencement particulier, on peut obtenir un champ électrique pulsé sensiblement perpendiculaire à la direction principale d'écoulement de la substance.

Dans un autre mode de réalisation préféré de l'invention, chaque zone de traitement est formée par une association de deux électrodes positionnées de manière espacée, dans une direction principale d'écoulement de la substance, les moyens de mise en mouvement comprenant des moyens pour faire tourner au moins une partie de la paroi sur laquelle se situent les électrodes.

Par ailleurs, on peut également prévoir que chaque zone de traitement soit formée par une association de deux électrodes positionnées de manière espacée, dans une direction principale d'écoulement de la substance, sur un organe se situant dans une zone d'écoulement de cette substance, les moyens de mise en mouvement comprenant des moyens pour faire tourner l'organe situé à l'intérieur de la zone d'écoulement.

Avantageusement, les réalisations préférentielles de l'invention dans lesquelles les deux électrodes sont positionnées de manière espacée sur un élément unique du dispositif, permet de créer un champ électrique sensiblement parallèle à la direction principale d'écoulement de la substance.

De façon préférée, l'organe se situant dans la zone d'écoulement comprend une ogive isolante, ce qui favorise le bon écoulement de la substance en minimisant les pertes de charge à l'intérieur de la zone d'écoulement de cette substance.

En raison de la possibilité de pouvoir traiter la substance avec des courants faibles, le dispositif peut comprendre un générateur d'impulsions comportant des interrupteurs électroniques à base de semi-conducteurs ou à base de matrices de semi-conducteurs.

Ce type de générateur est très fiable et tout à fait adapté pour fonctionner à des fréquences élevées, pouvant atteindre 1 MHz. Cette caractéristique permet de traiter des débits de substance importants, la qualité du traitement n'étant pas dépendante de la durée des impulsions, mais uniquement de l'amplitude de ces dernières. En augmentant la fréquence de ces impulsions électriques, il est alors possible de traiter des débits de substance supérieurs à ceux traités par les dispositifs de l'art antérieur, tout en conservant ou augmentant la qualité du traitement.

De plus, ces générateurs particuliers ont des coûts très faibles, notamment en comparaison avec le coût des générateurs du type tubes à gaz.

De manière avantageuse, le générateur d'impulsions peut être couplé à des moyens de compression magnétique. Par un système d'inductances saturables, ces moyens de compression engendrent une diminution de la durée des impulsions, sans pour autant modifier la qualité du traitement. L'énergie consommée est alors plus faible et l'augmentation de température au sein de la substance est moins importante. Les aliments traités conservent ainsi leur qualités nutritives et gustatives sans que l'on ait à utiliser des moyens additionnels de refroidissement de la substance.

L'invention a également pour objet un procédé de traitement par champ électrique pulsé d'une substance en écoulement colonisée par au moins un organisme indésirable, ce procédé étant mis en oeuvre à l'aide d'un dispositif de traitement tel que celui objet de la présente invention.

D'autres caractéristiques et avantages de l'invention apparaîtront dans la description non limitative ci-dessous.

### BRÈVE DESCRIPTION DES DESSINS

Cette description sera faite aux regard des dessins annexés parmi lesquels :
- la figure 1 représente une vue schématique d'un dispositif selon un premier mode de réalisation préféré l'invention,
- la figure 2 représente une vue schématique d'un dispositif selon un second mode de réalisation préféré l'invention,
- la figure 3 représente une vue schématique d'un dispositif selon un troisième mode de réalisation préféré l'invention,
- la figure 4 représente une vue schématique d'un dispositif selon un quatrième mode de réalisation préféré l'invention,
- la figure 5 représente une vue schématique d'un dispositif selon un cinquième mode de réalisation préféré l'invention, et
- la figure 6 représente une vue schématique d'un dispositif selon un sixième mode de réalisation préféré l'invention.

### EXPOSÉ DÉTAILLÉ DE MODES DE RÉALISATION PRÉFÉRÉS

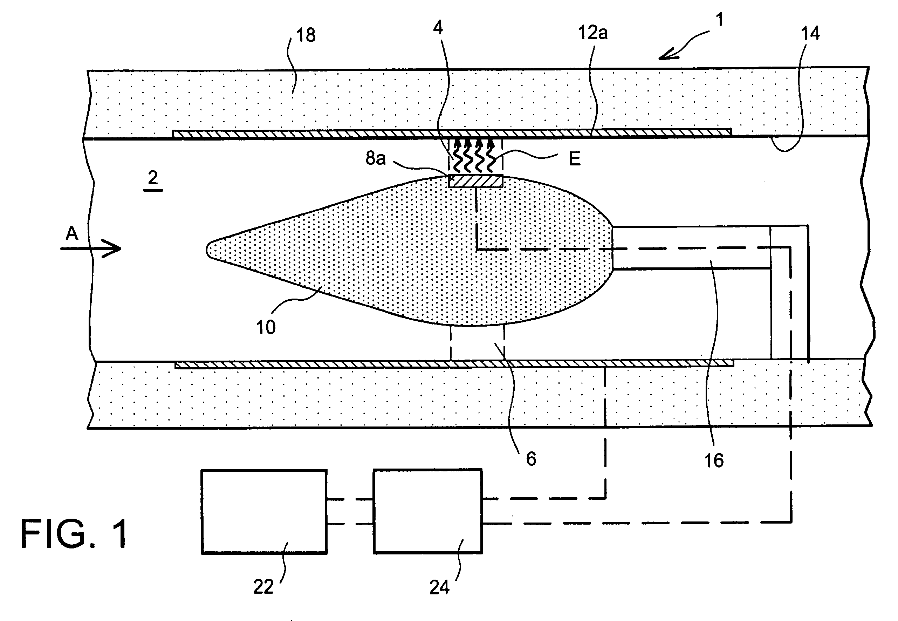

En référence aux figures 1 à 3, on voit un dispositif 1 de traitement par champ électrique pulsé selon divers modes de réalisation préférés de l'invention.

Une substance à traiter circule dans une zone d'écoulement 2 du dispositif 1, dans une direction principale d'écoulement de la substance représentée par la flèche A. L'écoulement de la substance est assuré par des moyens (non représentés) du type pompe couplés au dispositif 1.

La substance à traiter peut être de tout type. A titre d'exemple, on peut citer les aliments liquides comme le lait, le jus d'orange ou le blanc d'oeuf, les aliments semi-solides ou encore les eaux destinées à être rendues potables. Dans certains cas, il sera également possible de traiter un mélange d'au moins deux des éléments cités ci-dessus.

Le traitement par champ électrique pulsé a pour but de supprimer l'ensemble des organismes indésirables ayant colonisé la substance. Parmi eux, on note les bactéries, les spores ou tout autre micro-organisme microscopique indésirable susceptible de coloniser la substance.

Le dispositif comprend au moins une zone de traitement 4 de la substance, et de préférence une seule. C'est à l'intérieur de cette zone de traitement 4 qu'un champ électrique pulsé est appliqué, ce dernier étant apte à détruire les organismes indésirables ayant colonisé la substance à traiter. Sur les différentes figures 1 à 3, les flèches E symbolisent les lignes de champ du champ électrique pulsé dans la zone de traitement 4.

La zone de traitement 4 se situe dans une zone de passage 6 lui étant associée, mais s'inscrit uniquement partiellement dans cette zone de passage 6 de la substance, de sorte que la zone de traitement 4 dispose d'un volume qui soit strictement inférieur au volume de la zone de passage 6 associée. En d'autres termes, la zone de passage 6 prend préférentiellement et sensiblement la forme d'un anneau, tandis que la zone de traitement ne constitue qu'une seule portion angulaire de cet anneau.

Par ailleurs, pour assurer un traitement de la totalité de la substance se situant dans la zone de passage 6, le dispositif 1 est muni de moyens de mise en mouvement de la zone de traitement 4, afin que cette zone de traitement 4 de la substance puisse se déplacer dans toute la zone de passage 6 associée. Ainsi, à un instant t quelconque du traitement, on agit seulement sur une partie de la substance se trouvant dans la zone de passage 6, ce qui permet de traiter des débits de substance très importants, et d'effectuer un traitement de qualité très satisfaisante.

Selon les différents modes de réalisation préférés de l'invention représentés sur les figures 1 à 3, la zone de traitement 4 de la substance est formée par l'association de deux électrodes situées en regard l'une de l'autre. Il s'agit d'une électrode primaire 8a,8b,8c positionnée sur un organe 10, et d'une électrode secondaire 12a,12b,12c située sur une paroi 14 délimitant en partie la zone de traitement 4. Bien entendu, ces électrodes primaire et secondaire sont de polarité opposée, afin que leur association, en combinaison avec un générateur d'impulsions 22, engendre la création d'un champ électrique pulsé.

Plusieurs techniques sont susceptibles d'être mises en oeuvre pour effectuer le déplacement de la zone de traitement 4.

Selon un premier mode de réalisation et en référence à la figure 1, les moyens de mise en mouvement de la chambre de traitement 4 comprennent des moyens 16 du type moteur pour faire tourner l'organe 10 à l'intérieur de la zone d'écoulement 2. L'électrode primaire 8a dispose alors d'une surface réduite et est entraînée en rotation par l'intermédiaire de l'organe 10, préférentiellement constitué d'une ogive isolante, afin de coopérer avec l'électrode secondaire 12a immobile et annulaire. De préférence, l'électrode secondaire 12a est constituée par une canalisation conductrice 18 à l'intérieur de laquelle s'écoule la substance à traiter, et l'organe 10 est centré sur un axe de cette canalisation 18, autour duquel il tourne.

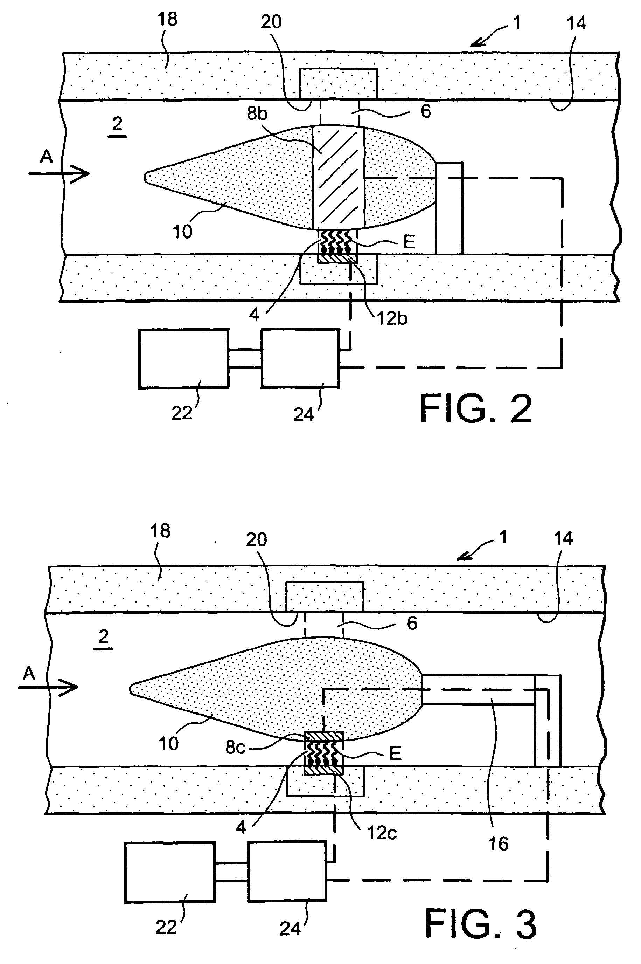

Dans un second mode de réalisation préféré de l'invention visible sur la figure 2, les moyens de mise en mouvement de la chambre de traitement 4 comprennent des moyens (non représentés) pour faire tourner au moins une partie 20 de la paroi 14 sur laquelle se situe l'électrode secondaire 12b. L'électrode secondaire 12b est ainsi mise en rotation par l'intermédiaire de la partie 20 de la paroi 14 autour de l'organe 10, sur lequel se situe l'électrode primaire 8b immobile et annulaire.

Un troisième mode de réalisation préféré de l'invention est visible sur la figure 3. Dans cette réalisation particulière, les moyens de mise en mouvement de la zone de traitement comprennent d'une part des moyens 16 pour faire tourner l'organe 10 à l'intérieur de la zone d'écoulement 2, et d'autre part des moyens (non représentés) pour faire tourner au moins une partie 20 de la paroi 14 sur laquelle se situe l'électrode secondaire 12c. Ici, les deux électrodes primaire 8c et secondaire 12c sont toutes les deux de faible surface et en rotation, de sorte que leur mouvement permet à ces électrodes 8c,12c de rester en regard l'une de l'autre, afin que leur association puisse former une zone de traitement 4.

Dans ces trois premiers modes de réalisation préférés de l'invention, le positionnement particulier des première 8a,8b,8c et seconde électrodes 12a,12b,12c engendre la création d'un champ électrique pulsé transversal, à savoir un champ électrique dont la direction est sensiblement perpendiculaire à la direction principale d'écoulement de la substance (flèche A).

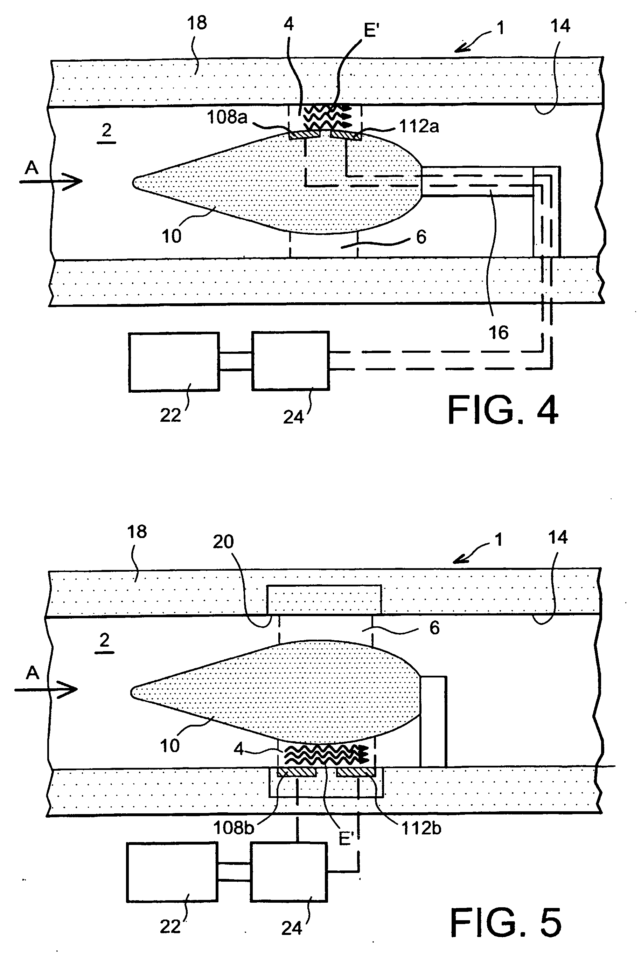

Par ailleurs, il est également possible d'utiliser un dispositif 1 de traitement dans lequel le champ électrique pulsé est longitudinal, donc de direction sensiblement parallèle à la direction principale d'écoulement. C'est notamment le cas des dispositifs 1 représentés sur les figures 4 et 5, où les flèches E' symbolisent les lignes de champ du champ électrique pulsé longitudinal.

En référence à la figure 4 et selon un quatrième mode de réalisation préféré de l'invention, un dispositif 1 de traitement est réalisé de telle sorte que chaque zone de traitement 4 est formée par une association de deux électrodes positionnées de manière espacée, dans la direction principale d'écoulement de la substance, sur l'organe 10 se situant dans la zone d'écoulement 2 de cette substance. Les moyens de mise en mouvement de la zone de traitement 4 comprennent dans ce cas des moyens 16 du type moteur pour faire tourner l'organe 10 à l'intérieur de la zone d'écoulement 2. Les deux électrodes comprennent une électrode primaire 108a et une électrode secondaire 112a, ces dernières, de polarité opposée, étant indifféremment placées en amont ou en aval dans la direction principal d'écoulement de la substance. La zone de traitement 4 à champ électrique pulsé longitudinal est alors en mesure de se déplacer à l'intérieur de toute la zone de passage 6 associée.

Toujours pour obtenir un champ électrique pulsé longitudinal, un cinquième mode de réalisation préféré de l'invention peut être utilisé. Comme on peut le voir sur la figure 5, un dispositif 1 comprend une zone de traitement 4 formée par une association de deux électrodes positionnées de manière espacée, dans une direction principale d'écoulement de la substance. Le dispositif 1 comprend une électrode primaire 108b et une électrode secondaire 112b, chacune d'entre elles étant située sur une paroi 14 délimitant en partie la zone d'écoulement 2. Les moyens de mise en mouvement de la chambre de traitement 4 comprennent des moyens (non représentés) pour faire tourner au moins une partie 20 de la paroi 14 sur laquelle se situent ces électrodes 108b et 112b.

Il est à préciser que l'homme du métier sera en mesure d'adapter la vitesse de rotation de la chambre de traitement 4 en fonction de paramètres comme le débit de la substance ou la qualité de traitement escomptée.

Il est également possible, pour l'ensemble des modes de réalisation préférés décrits ci-dessus, de doter le dispositif 1 de plusieurs zones de traitement 4. Cette caractéristique technique permet d'améliorer l'efficacité du traitement de la substance, celle-ci devant transiter à travers plusieurs zones de passage 6, dans chacune desquelles elle subira un traitement par champ électrique pulsé.

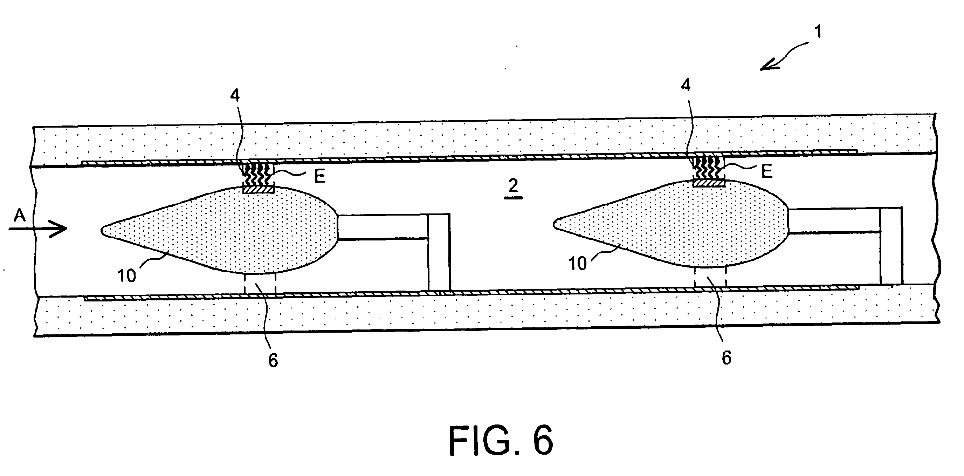

Pour illustrer ce type de réalisation, on peut voir sur la figure 6 un sixième mode de réalisation préféré de l'invention. Le dispositif 1 comprend deux zones de traitement 4, chacune située dans sa zone de passage 6 associée, et toutes les deux positionnées en série dans la zone d'écoulement 2. Le fait de disposer les zones de traitement 4 de la sorte, c'est-à-dire positionnées les unes à la suite des autres dans la direction principale d'écoulement de la substance représentée par la flèche A, permet également d'avoir une plus grande liberté dans le choix du rapport débit de substance/qualité de traitement. Notons que le nombre de zones de traitement 4 n'est pas limité à deux, et que ces zones de traitement 4 peuvent aussi être obtenues selon l'une quelconque des réalisations préférées décrites ci-dessus.

Dans le dispositif 1 selon l'invention, le volume de substance traité à un instant t du traitement est inférieur au volume de la zone de passage 6 associée. En effet, de façon préférentielle, le volume de chaque zone de traitement 4 est faible et n'excède pas quelques centimètres cube. L'impédance de ce volume de substance est donc forte, ce qui permet d'utiliser des courants moins importants pour réaliser le traitement. Il est alors possible de mettre en oeuvre des générateurs dont les courants délivrés et les coûts sont réduits par rapport à ceux de l'art antérieur.

L'utilisation de générateurs d'impulsions du type comportant des interrupteurs électroniques à base de semi-conducteurs ou de matrices de semi-conducteurs est alors particulièrement adaptée au dispositif 1. Ces générateurs sont en effet conçus pour apporter une réponse industrielle à coûts d'investissement et de fonctionnement faibles. De plus, la fréquence de récurrence des impulsions avec de tels générateurs peut atteindre 1 MHz, pour une durée d'impulsion allant d'environ 50 nanosecondes à environ 10 microsecondes. Toujours à l'aide de ces générateurs, le champ électrique pulsé à l'intérieur de chaque zone de traitement 4 a une valeur comprise de préférence entre environ 1 kV/cm et environ 100 kV/cm, ce qui assure la destruction de tout organisme indésirable ayant colonisé la substance à traiter.

Afin de réduire encore davantage la durée des impulsions pour traiter un volume de substance encore plus important, il est avantageux de coupler le générateur d'impulsions 22 à des moyens 24 de compression magnétique. En effet, seule l'amplitude de l'impulsion électrique ayant une influence sur la qualité du traitement, il est souhaitable de rendre ces impulsions les plus brèves possibles afin de limiter l'énergie consommée, et d'engendrer qu'un faible réchauffement de la substance. Dans un cas comme celui-ci où le réchauffement de la substance est peu significatif, des moyens de refroidissement de la substance ne sont pas nécessaires.

Enfin, pour un traitement plus efficace de la substance, le dispositif 1 est réalisé de sorte que l'écoulement de cette substance soit continue dans la zone d'écoulement 2, et que le champ électrique pulsé soit uniforme dans chacune des zones de traitement 4.

L'invention concerne également un procédé de traitement par champ électrique pulsé d'une substance en écoulement colonisée par au moins un organisme indésirable, ce procédé étant apte à être mis en oeuvre par un dispositif 1 tel que celui décrit ci-dessus.

En relation avec le dispositif 1, la particularité de ce procédé réside dans le fait de ne traiter, à un instant t donné, qu'une seule partie de la substance se situant dans une zone de passage 6. Pendant l'écoulement de la substance à l'intérieur de la zone d'écoulement 2, on effectue un déplacement de la zone de traitement 4 à l'intérieur de la zone de passage 6 associée, pour qu'à un instant t + δt, l'ensemble de chaque zone de passage 6 ait été balayée par la zone de traitement 4 se situant dans la zone de passage 6 associée.

Bien entendu, diverses modifications peuvent être apportées par l'homme du métier au dispositif et au procédé qui viennent d'être décrits, uniquement à titre d'exemples non limitatifs.

## Revendications

1. Dispositif (1) de traitement par champ électrique pulsé d'une substance en écoulement colonisée par au moins un organisme indésirable, ledit dispositif (1) comprenant une zone d'écoulement (2) de la substance dans laquelle se trouve au moins une zone de traitement (4) se situant dans une zone de passage (6) associée de la substance, **caractérisé en ce que** chaque zone de traitement (4) s'inscrit uniquement partiellement dans la zone de passage (6) associée, ledit dispositif (1) comprenant de plus des moyens de mise en mouvement pour déplacer chaque zone de traitement (4) de la substance dans toute la zone de passage (6) associée.

2. Dispositif (1) de traitement selon la revendication 1, **caractérisé en ce que** chaque zone de traitement (4) est formée par une association de deux électrodes situées en regard l'une de l'autre, lesdites électrodes comprenant une électrode primaire (8a,8b,8c) positionnée sur un organe (10) se situant à l'intérieur de la zone d'écoulement (2) de la substance et une électrode secondaire (12a,12b,12c) située sur une paroi (14) délimitant en partie la zone d'écoulement (2).

3. Dispositif (1) de traitement selon la revendication 2, **caractérisé en ce que** les moyens de mise en mouvement comprennent des moyens (16) pour faire tourner ledit organe (10) à l'intérieur de la zone d'écoulement (2), et **en ce que** l'électrode secondaire (12a) est annulaire et immobile.

4. Dispositif (1) de traitement selon la revendication 3, **caractérisé en ce que** l'électrode secondaire (12a) est constituée par une canalisation conductrice (18) à l'intérieur de laquelle s'écoule la substance.

5. Dispositif (1) de traitement selon la revendication 2, **caractérisé en ce que** les moyens de mise en mouvement comprennent des moyens pour faire tourner au moins une partie (20) de la paroi (14) sur laquelle se situe l'électrode secondaire (12b) et **en ce que** l'électrode primaire (8b) est annulaire et immobile.

6. Dispositif (1) de traitement selon la revendication 2, **caractérisé en ce que** les moyens de mise en mouvement comprennent des moyens (16) pour faire tourner ledit organe (10) à l'intérieur de la zone d'écoulement (2), et **en ce que** ces moyens de mise en mouvement comprennent de plus des moyens pour faire tourner au moins une partie (20) de la paroi (14) sur laquelle se situe l'électrode secondaire (12c).

7. Dispositif (1) de traitement selon l'une quelconque des revendications précédentes, **caractérisé en ce que** le champ électrique pulsé est sensiblement perpendiculaire à une direction principale d'écoulement de la substance.

8. Dispositif (1) de traitement selon la revendication 1, **caractérisé en ce que** chaque zone de traitement (4) est formée par une association de deux électrodes (108b,112b) positionnées de manière espacée, dans une direction principale d'écoulement de la substance, sur une paroi (14) délimitant en partie la zone d'écoulement (2), les moyens de mise en mouvement comprenant des moyens pour faire tourner au moins une partie (20) de la paroi (14) sur laquelle se situent lesdites électrodes (108b, 112b).

9. Dispositif (1) de traitement selon la revendication 1, **caractérisé en ce que** chaque zone de traitement (4) est formée par une association de deux électrodes (108a, 112a) positionnées de manière espacée, dans une direction principale d'écoulement de la substance, sur un organe (10) se situant dans une zone d'écoulement de cette substance, les moyens de mise en mouvement comprenant des moyens (16) pour faire tourner ledit organe (10) à l'intérieur de la zone d'écoulement (2).

10. Dispositif (1) de traitement selon l'une quelconque des revendications 1, 8 et 9, **caractérisé en ce que** le champ électrique pulsé appliqué est sensiblement parallèle à une direction principale d'écoulement de la substance.

11. Dispositif (1) de traitement selon l'une quelconque des revendications 2 à 6 et 9, **caractérisé en ce que** l'organe (10) se situant dans la zone d'écoulement (2) comprend une ogive isolante.

12. Dispositif (1) de traitement selon l'une quelconque des revendications précédentes, **caractérisé en ce que** le dispositif (1) comprend un générateur d'impulsions (22) comportant des interrupteurs électroniques à base de semi-conducteurs.

13. Dispositif (1) de traitement selon l'une quelconque des revendications 1 à 11, **caractérisé en ce que** le dispositif (1) comprend un générateur d'impulsions (22) comportant des interrupteurs électroniques à base de matrices de semi-conducteurs.

14. Dispositif (1) de traitement selon la revendication 12 ou la revendication 13, **caractérisé en ce que** le générateur d'impulsions (22) est couplé à des moyens (24) de compression magnétique.

15. Dispositif (1) de traitement selon l'une quelconque des revendications précédentes, **caractérisé en ce que** la substance s'écoule de façon continue.

16. Dispositif (1) de traitement selon l'une quelconque des revendications précédentes, **caractérisé en ce que** le champ électrique pulsé dans chaque zone de traitement (4) de la substance a une valeur allant d'environ 1 kV/cm à environ 100 kV/cm.

17. Dispositif (1) de traitement selon l'une quelconque des revendications précédentes, **caractérisé en ce que** le champ électrique pulsé est appliqué à une fréquence de récurrence pouvant atteindre 1 MHz.

18. Dispositif (1) de traitement selon l'une quelconque des revendications précédentes, **caractérisé en ce que** le champ électrique pulsé dans chaque zone de traitement (4) comprend des impulsions ayant une durée allant d'environ 50 nanosecondes à environ 10 microsecondes.

19. Dispositif (1) de traitement selon l'une quelconque des revendications précédentes, **caractérisé en ce que** le champ électrique pulsé appliqué dans chaque zone de traitement (4) est uniforme.

20. Dispositif (1) de traitement selon l'une quelconque des revendications précédentes, **caractérisé en ce que** le dispositif (1) est apte à traiter au moins une des substances prises parmi les aliments liquides, les aliments semi-solides, les eaux et un mélange d'au moins deux de ces substances.

21. Procédé de traitement par champ électrique pulsé d'une substance en écoulement colonisée par au moins un organisme indésirable, **caractérisé en ce que** ledit procédé est mis en oeuvre à l'aide d'un dispositif (1) de traitement selon l'une quelconque des revendications précédentes.

## Claims

1. Treatment device (1) of a flowing substance colonised by at least one undesirable organism, using a pulsed electrical field, said device (1) comprising one flow zone (2) of the substance in which is located at least one treatment zone (4) located in an associated passage zone (6) of the substance, **characterised in that** each treatment zone (4) is only partially located within the associated passage zone (6), said device (1) also comprising means of creating movement for displacing each substance treatment zone (4) in the entire associated passage zone (6).

2. Treatment device (1) according to claim 1, **characterised in that** each treatment zone (4) is formed by a combination of two electrodes facing each other, said electrodes comprising one primary electrode (8a, 8b, 8c) placed on a device (10) inside the substance flow zone (2) of the substance and a secondary electrode (12a, 12b, 12c) placed on a wall (14) partly delimiting the flow zone (2).

3. Treatment device (1) according to claim 2, **characterised in that** the means of creating movement comprise means (16) for rotating the said device (10) inside the flow zone (2), and **in that** the secondary electrode (12a) is annular and immobile.

4. Treatment device (1) according to claim 3, **characterised in that** the secondary electrode (12a) is composed of a conducting duct (18) inside which the substance flows.

5. Treatment device (1) according to claim 2, **characterised in that** the means of creating movement are means of rotating at least a part (20) of the wall (14) on which the secondary electrode (12b) is located and **in that** the primary electrode (8b) is annular and immobile.

6. Treatment device (1) according to claim 2, **characterised in that** the means of creating movement comprise means (16) of rotating said device (10) inside the flow zone (2), and **in that** these means of creating movement also comprise means of rotating at least a part (20) of the wall (14) on which the secondary electrode (12c) is located.

7. Treatment device (1) according to any one of the previous claims, **characterised in that** the pulsed electrical field is approximately perpendicular to a main flow direction of the substance.

8. Treatment device (1) according to claim 1, **characterised in that** each treatment zone (4) is formed by a combination of two electrodes (108b, 112b) placed at a spacing from each other, in a main substance flow direction, on a wall (14) partly delimiting the flow zone (2), the means of creating movement comprising means of rotating of at least a part (20) of the wall (14) on which said electrodes (108b, 112b) are located.

9. Treatment device (1) according to claim 1, **characterised in that** each treatment zone (4) is formed by a combination of two electrodes (108a, 112a) placed at a spacing from each other, in a main substance flow direction, on a device (10) located in a flow zone of this substance, the means of creating movement comprising means (16) of rotating said device (10) inside the flow zone (2).

10. Treatment device (1) according to any one of claims 1, 8 and 9, **characterised in that** the applied pulsed electrical field is approximately parallel to a main flow direction of the substance.

11. Treatment device (1) according to any one of claims 2 to 6 and 9, **characterised in that** the device (10) located in the flow zone (2) comprises an insulating rounded cone.

12. Treatment device (1) according to any one of the previous claims, **characterised in that** the device (1) comprises a pulse generator (22) with electronic switches based on semiconductors.

13. Treatment device (1) according to any one of claims 1 to 11, **characterised in that** the device (1) comprises a pulse generator (22) with electronic switches based on matrices of semiconductors.

14. Treatment device according to claim 12 or claim 13, **characterised in that** the pulse generator (22) is coupled with means (24) of magnetic compression.

15. Treatment device according to any one of the previous claims, **characterised in that** the substance flows continuously.

16. Treatment device (1) according to any one of the previous claims, **characterised in that** the value of the pulsed electrical field in each treatment zone (4) varies from about 1 kV/cm to about 100 kV/cm.

17. Treatment device (1) according to any one of the previous claims, **characterised** that the pulsed electrical field is applied at a recurrence frequency that can reach 1 MHz.

18. Treatment device (1) according to any one of the previous claims, **characterized in that** the pulsed electrical field in each treatment zone (4) comprises pulse with a duration varying from about 50 nanoseconds to about 10 microseconds.

19. Treatment device (1) according to any one of the previous claims, **characterized in that** the applied pulsed electrical field in each treatment zone (4) is uniform.

20. Treatment device (1) according to any one of the previous claims, **characterized in that** the device (1) is capable of treating at least one of the substances taken from among liquid foods, semi-solid foods, water and a mix of at least two of these substances.

21. Treatment process by pulsed electrical field of a flowing substance colonized by at least one undesirable organism, **characterized in that** the said process is used with a treatment device (1) according to any one of the previous claims.

## Patentansprüche

1. Vorrichtung (1) zur Behandlung einer strömenden Substanz, die mindestens einen unerwünschten Organismus enthält, mit einem gepulsten Feld, wobei die genannte Vorrichtung (1) eine Strömungszone (2) der Substanz umfasst, in der sich wenigstens eine Behandlungszone (4) befindet, die sich in einer zugeordneten Durchlasszone (6) der Substanz befindet,
**dadurch gekennzeichnet, dass** jede Behandlungszone (4) nur partiell in der zugeordneten Durchlasszone (6) enthalten ist und die genannte Vorrichtung (1) zudem Bewegungserzeugungsmittel umfasst, um jede Substanzbehandlungszone (4) in der gesamten zugeordneten Durchlasszone (6) zu verschieben.

2. Behandlungsvorrichtung (1) nach Anspruch 1, **dadurch gekennzeichnet, dass** jede Behandlungszone (4) durch zwei einander zugeordnete, sich gegenüberstehende Elektroden gebildet wird, wobei diese Elektroden eine Primärelektrode (8a, 8b, 8c) umfassen, die in einem Organ (10) angeordnet ist, das sich im Innern der Strömungszone (2) der Substanz befindet, und eine Sekundärelektrode (12a, 12b, 12c), die sich auf einer die Strömungszone (2) teilweise abgrenzenden Wand (14) befindet.

3. Behandlungsvorrichtung (1) nach Anspruch 2, **dadurch gekennzeichnet, dass** die Bewegungserzeugungsmittel Einrichtungen (16) umfassen, um das genannte Organ (10) im Innern der Strömungszone (2) in Drehung zu versetzen, und dass die Sekundärelektrode (12a) ringförmig und immobil ist.

4. Behandlungsvorrichtung (1) nach Anspruch 3, **dadurch gekennzeichnet, dass** die Sekundärelektrode (12a) durch eine Leitung (18) gebildet wird, in deren Innern die Substanz strömt.

5. Behandlungsvorrichtung (1) nach Anspruch 2, **dadurch gekennzeichnet, dass** die Bewegungserzeugungsmittel Einrichtungen umfassen, um wenigstens einen Teil (20) der Wand (14), in dem sich die Sekundärelektrode (12b) befindet, in Drehung zu versetzen, und dadurch, dass die Primärelektrode (8b) ringförmig und immobil ist.

6. Behandlungsvorrichtung (1) nach Anspruch 2, **dadurch gekennzeichnet, dass** die Bewegungserzeugungsmittel Einrichtungen (16) umfassen, um das Organ (10) im Innern der Strömungszone (2) in Drehung zu versetzen, und dadurch, dass die Bewegungserzeugungsmittel zudem Einrichtungen umfassen, um wenigstens einen Teil (20) der Wand (14), in dem sich die Sekundärelektrode (12c) befindet, in Drehung zu versetzen.

7. Behandlungsvorrichtung (1) nach einem der vorangehenden Ansprüche, **dadurch gekennzeichnet, dass** das gepulste elektrische Feld im Wesentlichen senkrecht zu einer Hauptströmungsrichtung der Substanz ist.

8. Behandlungsvorrichtung (1) nach Anspruch 1, **dadurch gekennzeichnet, dass** jede Behandlungszone (4) durch zwei einander zugeordnete Elektroden (108b, 112b) gebildet wird, die in beabstandeter Weise in einer Hauptströmungsrichtung der Substanz in einer die Strömungszone (2) teilweise abgrenzenden Wand (14) angeordnet sind, wobei die Bewegungserzeugungsmittel Einrichtungen umfassen, um wenigstens einen Teil (20) der Wand (14) in Drehung zu versetzen, in dem sich die genannten Elektroden (108b, 112b) befinden.

9. Behandlungsvorrichtung (1) nach Anspruch 1, **dadurch gekennzeichnet, dass** jede Behandlungszone (4) durch zwei einander zugeordnete Elektroden (108a, 112a) gebildet wird, die in beabstandeter Weise in einer Hauptströmungsrichtung der Substanz in einem Organ (10) angeordnet sind, das sich in einer Strömungszone dieser Substanz befindet, wobei die Bewegungserzeugungsmittel Einrichtungen (16) umfassen, um das Organ (10) im Innern der Strömungszone (2) in Drehung zu versetzen.

10. Behandlungsvorrichtung (1) nach einem der Ansprüche 1, 8 und 9, **dadurch gekennzeichnet, dass** das angewendete gepulste elektrische Feld im Wesentlichen parallel ist zu einer Hauptströmungsrichtung der Substanz.

11. Behandlungsvorrichtung (1) nach einem der Ansprüche 2 bis 6 und 9, **dadurch gekennzeichnet, dass** das sich in der Strömungszone (2) befindliche Organ (10) einen isolierenden Spitzbogen bzw. Spitzkopf umfasst.

12. Behandlungsvorrichtung (1) nach einem der vorangehenden Ansprüche, **dadurch gekennzeichnet, dass** die Vorrichtung (1) einen Impulsgenerator (22) mit elektronischen Schaltern auf der Basis von Halbleitern umfasst.

13. Behandlungsvorrichtung (1) nach einem der Ansprüche 1 bis 11, **dadurch gekennzeichnet, dass** die Vorrichtung (1) einen Impulsgenerator (22) mit elektronischen Schaltern auf der Basis von Halbleitermatrizen umfasst.

14. Behandlungsvorrichtung (1) nach Anspruch 12 oder Anspruch 13, **dadurch gekennzeichnet, dass** der Impulsgenerator (22) mit magnetischen Kompressionseinrichtungen (24) gekoppelt ist.

15. Behandlungsvorrichtung (1) nach einem der vorangehenden Ansprüche, **dadurch gekennzeichnet, dass** die Substanz in kontinuierlicher Weise strömt.

16. Behandlungsvorrichtung (1) nach einem der vorangehenden Ansprüche, **dadurch gekennzeichnet, dass** das gepulste elektrische Feld in jeder Behandlungszone (4) der Substanz einen Wert aufweist, der von ungefähr 1 kV/cm bis ungefähr 100 kV/cm geht.

17. Behandlungsvorrichtung (1) nach einem der vorangehenden Ansprüche, **dadurch gekennzeichnet, dass** das gepulste elektrische Feld mit einer Impulsfolgefrequenz angewendet wird, die 1 MHz erreichen kann.

18. Behandlungsvorrichtung (1) nach einem der vorangehenden Ansprüche, **dadurch gekennzeichnet, dass** das gepulste elektrische Feld in jeder Behandlungszone (4) Impulse mit einer Dauer umfasst, die von ungefähr 50 Nanosekunden bis ungefähr 10 Mikrosekunden geht.

19. Behandlungsvorrichtung (1) nach einem der vorangehenden Ansprüche, **dadurch gekennzeichnet, dass** das in jeder Behandlungszone (4) angewendete gepulste elektrische Feld gleichförmig ist.

20. Behandlungsvorrichtung (1) nach einem der vorangehenden Ansprüche, **dadurch gekennzeichnet, dass** die Vorrichtung (1) fähig ist, wenigstens eine der Substanzen zu behandeln, die ausgewählt werden unter den flüssigen Nahrungsmitteln, den halbfesten Nahrungsmitteln, den Wassern und einer Mischung aus wenigstens zweien dieser Substanzen.

21. Verfahren zur Behandlung einer strömenden Substanz, die mindestens einen unerwünschten Organismus enthält, mit einem gepulsten Feld, **dadurch gekennzeichnet, dass** dieses Verfahren mit Hilfe einer Behandlungsvorrichtung (1) nach einem der vorangehenden Ansprüche angewendet wird.
